# EUROPEAN PATENT APPLICATION

(11) **EP 3 748 745 A1**
(43) Date of publication of application: **09.12.2020**
(21) Application number: 19305706.4
(22) Date of filing: 03.06.2019
(51) Int. Cl.: H01M 4/62, H01M 4/88, H01M 10/052, H01M 10/0525

(54) **ECO-ELECTRODE, DEVICE STORING ELECTRICAL ENERGY AND PROCESS FOR PREPARATION THEREOF**

(71) Applicant: TOTAL SE, 92400 Courbevoie (FR); Université de Montréal, Montreal, QC H3T 1J4 (CA)
(72) Inventor: AYME-PERROT, David, 68330 HUNINGUE (FR); PROFILI, Jacopo, MONTRÉAL, Québec H2S 2J2 (CA); STAFFORD, Luc, MONTRÉAL, Québec H3M 2R6 (CA); ROUSSELOT, Steeve, MONTRÉAL, Québec H1Y 3H1 (CA); DOLLE, Mickaël, MONTRÉAL, Québec H2V 2V5 (CA)
(74) Representative: Lavoix

(57) **Abstract**

The present invention relates to a composite electrode for a device storing electrical energy wherein said electrode comprises an electrode body and an electrode shell, wherein said body comprises at least one water-soluble polymer and wherein at least a part of said shell comprises a shell comprising at least one organic or organometallic material.

The present invention also relates to a device storing electrical energy comprising said composite electrode and a process for preparing said composite electrode.

## Description

The present invention relates to a composite electrode for a device storing electrical energy, including for example batteries, capacitors such as for examples electrochemical double-layer capacitors (ultracapacitors). The invention also relates to a device storing electrical energy comprising said composite electrode and a process for preparing said composite electrode.

### State of the art

Most of the batteries and capacitors can be considered as toxic for the environment. For some specific applications, but also for a better future, getting eco-friendly or biodegradable device storing electrical energy would be relevant. Batteries are made of several types of materials (active materials, polymer binders, metallic current collectors, etc.) that need to be all revised if we want to get a more compatible system with environment. Binders are generally fluoro-based polymers whatever the battery electrolyte (aqueous or organic media).

Polymers that are soluble in water (CMC, PAA, etc.) are more and more considered as potential binders for electrodes that must work in organic electrolytes. The electrodes can be formulated in water which is a real advantage in terms of process.

Of course, such polymers cannot be used up to now as electrode binders for aqueous batteries because of their solubility in water. The use of binders soluble in an aqueous solvent, biosourced such as CMC (Carboxymethylcellulose) or other binders such as PEO (Polyethylene Oxide), PVA (Polyvinyl alcohol), PLA (Polylactic acid), etc., prevents using these electrodes with aqueous electrolytes. Indeed, when the electrode with a water-soluble binder is placed in contact with an aqueous electrolyte, the strong chemical interaction between water and binder leads to the loss of electronic percolation of the electrode due to the dissolution of the electrode. This reduces the field of application of this type of composite electrode binder for use in the field of "green" batteries. In this context, the possibility of using electrodes based on water-soluble binder such as for example CMC or other binders in an aqueous battery is an economic and environmental advantage. Accordingly, up to day, bio-sourced polymers, such as CMC, HPMC (hydroxypropyl methylcellulose), etc., cannot be used as electrode binders in aqueous batteries.

The manufacture of a typical composite electrode for batteries (ex: Li-ion battery, etc) consists of a mixture of active material, carbon black and binder deposited on a current collector. In case of ultracapacitors, the active material is a porous carbon. The mixture is prepared after the binder is dissolved in a solvent. The typical binder used is PolyVinyliDene Fluoride (PVDF) dissolved in N-MethylPyrolidone (NMP). Other binder/solvent combinations are also possible. The electrochemical stability and compatibility of the binder with the working environment in the study potential ranges should also be considered. PVDF is not well adapted to an aqueous medium. In this context, the possibility of using composite electrodes based upon bio-sourced binders in an aqueous battery would be a great advantage because the materials and processes for preparing industrial electrodes remain the same. In addition, the organic solvents commonly used are toxic, volatile and flammable. In this context, the use of binders soluble in an aqueous solvent therefore has a triple advantage.

So far, physicochemical treatments in the battery electrode field are mainly performed on active material particles to modify the chemical interfaces.

A lot of effort has been made to cover the active material (nanoparticles) before preparing the composite electrode. The only examples existing on direct deposits on composite electrodes are oxide deposits (typically Al₂O₃) (US 2012/0077082 A1) to reduce uncontrolled dissolution of electroactive products and formation of secondary products in organic electrolyte batteries.

In addition, the prior art mainly focuses on batteries operating in organic media.

### Goal of the invention

The present invention aims to overcome the technical problem of providing a composite electrode for device storing electrical energy.

The present invention aims to overcome the technical problem of providing a composite electrode for device storing electrical energy working with an aqueous electrolyte.

The present invention aims to overcome the technical problem of providing a composite electrode for device storing electrical energy working in contact of an aqueous medium.

The present invention aims to overcome the technical problem of providing a device storing electrical energy having such a composite electrode.

The present invention aims to overcome the technical problem of providing a process for preparing such a composite electrode.

In particular, the present invention aims to provide such process at low costs.

In particular, the present invention aims to overcome the technical problem of providing a process for preparing such a composite electrode while integrating an industrial process for preparing the device storing electrical energy and/or the composite electrode without modifying other process steps.

The present invention aims to overcome the technical problem of providing a process for adapting a composite electrode comprising a water-soluble binder to a device storing electrical energy working with an aqueous medium and/or an aqueous or an organic electrolyte.

The present invention aims to overcome the above technical problems while being eco-friendly or qualified as "green" process or device storing electrical energy.

### Description of the invention

The invention relates to a composite electrode for a device storing electrical energy and a process for preparing such composite electrode via a plasma treatment, notably to improve its electrochemical behavior.

The present invention relates to a composite electrode for a device storing electrical energy wherein said electrode comprises an electrode body and an electrode shell, wherein said body comprises at least one water-soluble polymer and wherein at least a part of said shell comprises a shell comprising at least one organic or organometallic material.

The composite electrode according to the invention comprises one or more binders including a water-soluble polymer.

In one embodiment, said water-soluble polymer is a bio-sourced polymer.

In one embodiment, said water-soluble polymer is selected from the group consisting of polysaccharides, Poly(ethylene glycol) (PEG), Polyoxyethylene (POE), Polyvinyl pyrrolidone (PVP), Polyvinyl alcohol (PVA), polylactic acid (PLA), Polyacrylic acid (PAA), Polyacrylamides, N-(2-Hydroxypropyl) methacrylamide (HPMA), Cellulose derivatives, in particular alkylcellulose, dialkylcellulose, hydroxyalkylcellulose, hydroxyalkylalkylcellulose, carboxyalkylcellulose, Pectins, Chitosan, Chitosan Derivatives, Dextran, Carrageenan, Guar gum, Guar gum derivatives, in particular chydroxypropyl guar, arboxyalkyl guar, Hyaluronic acid (HA), Starch or Starch Based Derivatives, polyethyloxazoline, and derivatives thereof.

In one embodiment, said water-soluble polymer is selected from the group consisting of Hydroxypropylmethyl cellulose (HPMC), Hydroxypropyl cellulose (HPC), Hydroxyethyl cellulose (HEC), Carboxy methyl cellulose (CMC), in particular Sodium carboxy methyl cellulose (Na-CMC).

Examples of water-soluble polymers are Polyethylene oxide (PEO, for example PEO from 100,000 g/mol to several million g/mol, typically to 1.5 million g/mol).

The invention allows to use bio-sourced polymers and more generally a water-soluble polymer as electrode binders for composite electrodes for devices storing electrical energy.

The coupling of water electrolytes with bio-sourced polymer binders is a very promising step to develop greener devices storing electrical energy.

The use of a water-soluble polymer, especially as binder in the composite electrode is of great technical advantage, notably regarding on the environmental, safety and manufacturing costs aspects, especially for preparing devices storing electrical energy.

Typically, water-soluble polymer used as binders for electrodes makes this type of composite electrodes usable in organic electrolytes but also in aqueous electrolytes.

The use of a water-soluble polymer, and especially CMC, as binder for the preparation of electrodes is an economic and environmental breakthrough.

A method to determine if a polymer is water-soluble is as follows:
1 to 5 wt.% of polymer is placed in a closed vial with 95 to 99 wt.% of water under stirring. A clear solution is observed after at least 2 days as no traces of undissolved polymer is observable anymore.

A composite electrode, comprising polymer (water-soluble polymer) as binder, is weighed so that to determine the exact amount of composite compound relative to the weight of current collector composing the electrode. The composite compound is composed of roughly 85 to 90 wt.% of active material, 5 to 10 wt.% of carbon black (C65, Timcal) and 5to 10 wt.% of binder. The electrode is placed in a vial containing 5 mL of water under steady conditions for 48h. After this time, the electrode is dried at 80°C under vacuum for 12h and then weighed again. The amount of remaining composite compound is then determined. When the polymeric binder does not ensure its role of mechanical cohesion of the composite electrode, the polymer is then considered water-soluble. Typically, when less than 10 wt.%, and preferably when less than 1 wt%, of composite compound remains on the current collector, the polymeric binder is considered water-soluble.

Typically, the thickness of said shell is of 500nm to 8 µm.

Typically, said composite electrode comprises one or more active materials, one or more binders and one or more conducting charges.

Typically, said conducting charges is selected from the group consisting of natural graphite; artificial graphite; carbon black; acetylene black; carbon fiber; carbon nanotubes; graphene pellets; powdered metal such as for example copper, nickel, aluminum, or silver; metal fiber and any combination thereof.

In one embodiment, said conducting charges are carbon black.

Typically, various substances can be used as the electrode active material. Such active material depends on the type of device storing electrical energy. Typically, said active material includes O atoms and at least one of cobalt (Co), manganese (Mn), nickel (Ni), aluminum (Al), chromium (Cr), iron (Fe), magnesium (Mg), strontium (Sr), vanadium (V) titanium (Ti), molybdenum (Mo), rare earth metals, copper (Cu), selenium (Se), sulfur (S), phosphorous (P) and silicon (Si) atoms.

Other substances can be used such as organic based active materials. Typically, said organic based active materials includes O, C and N atoms

In one embodiment, said active material is LiFePO₄ or FePO₄.

In one embodiment, said active material is porous carbon.

In one embodiment, said organic or organometallic material is deposited by plasma treatment. For example said organometallic material is an organosilane or an organoalane or a mixture of an organic material with an organometallic material, in different proportions. Examples of possible precursors of organometallic material include divinyltetramethyl disiloxane (DVTMDSO) octamethyl cyclotetrasiloxane (OMCATS) hexamethyldisilazane (HMDSN), tetramethyldisiloxane, tetramethylcyclotetrasiloxane, Trimethylsilane, methyl- and methoxy-group organosilicon like tetramethoxysilane (TMOS), methyltrimethoxysilane (MTMOS), dimethyldimethoxysilane (DMDMOS), trimethylmethoxysilane (TMMOS), Hexamethyldisilane, etc. Examples of precursors of organic materials are CxFy or CxFyAz (wherein A is a heteroatom, x, y and z represent the number of respective atoms present), such as 1-Fluoroheptane, 1,7-Octadiene, Acetylene, Methane, Propylene, Styrene, Acrylic acid, etc.

Advantageously, an organosilicon shell on a composite electrode comprising a water-soluble polymer, notably as binder, has never been reported according to inventors' knowledge, especially for limiting dissolution of said water-soluble polymer.

Advantageously, said shell presents a resistivity sufficiently low to function as composite electrode shell in a device storing electrical energy such as for example in a battery.

Advantageously, said shell represents a variable hydrophobic functionalization of the surface of the composite electrode body, which allows controlling the degree of wettability of liquids and their interaction with the electrode at the electrode/electrolyte interface. Advantageously, the present invention makes it easy to adapt to a wide range of liquid compositions.

Advantageously, said shell presents good mechanical properties able to withstand the volume changes induced during the electrochemical charges and discharges of the active material.

Advantageously, said shell presents a sufficient porosity / morphology to maintain the mechanical properties and allow the exchange of active species between the electrode and the electrolyte.

In one embodiment, said shell consists of a layer comprising said at least one organic or organometallic material. Typically, in this embodiment, this layer is at the surface of the composite electrode.

In one embodiment, said shell comprises a layer comprising said at least one organic or organometallic material and one or more other layer. In this embodiment, the layer comprising said at least one organic or organometallic material is at the surface of the composite electrode or not at the surface.

In one embodiment, the surface of the composite electrode comprises at least one layer of molecules functionalizing the surface of the composite electrode, notably to modify the wettability of the surface of the composite electrode and/or the interactions with the surrounding liquid.

In one embodiment, said organometallic material is deposited by plasma deposition, in particular Plasma-Enhanced Chemical Vapor Deposition (PECVD).

Preferably, said plasma treatment is carried out at atmospheric pressure.

In one embodiment, said plasma treatment is carried out at reduced pressure.

Advantageously, said plasma treatment is carried out at atmospheric pressure in a planar geometry (plane-plan configuration of the process).

In one embodiment, said plasma treatment comprises a dielectric barrier discharge, preferably said dielectric barrier discharge being suitable for processing of laminar substrates.

In a preferred embodiment, said plasma treatment is integrated into a roll-to-roll process. Advantageously, this allows operation in semi-industrial conditions allowing continuous deposition of a protective film or layer on reels, typically of several meters in length.

In one embodiment, said plasma treatment is achieved by using other reactor geometries (non-planar) at atmospheric pressure.

Advantageously, said plasma treatment is easily implemented in a jet type treatment operating on a mechanical arm.

Typically, to generate the plasma, the current collector covered by the electrode is placed in a plasma reactor operating at atmospheric pressure or at low pressure.

In one embodiment, to generate the plasma, a carrier gas (typically He, Ar or N2) is mixed in variable proportions with a reactive gas (N2, N₂O, O₂, H2, CH₄, C₂H₆, CF₄, C₃F₆, C₄F₈) and/or with a gas comprising at least one organic and/or organometallic molecule.

In one embodiment, a gas comprising compounds for a targeted application, such as electrode protection for organic electrolyte batteries.

Typically, the power supply is adapted to the plasma system used.

If the plasma treatment is performed at atmospheric pressure, radiofrequency, audio, microwave power or even micro and nano-pulsed supplies are preferred. If the plasma treatment is performed at low pressure, DC, radiofrequency or microwave power supplies are preferred.

Advantageously, said plasma treatment at atmospheric pressure operates in a homogeneous regime (Townsend discharge, or luminescent/glow) or in a filamentary regime if the energy dissipated through the filaments is controlled in such a way as not to damage the current collector and to control the homogeneity of the treatment (for example with a dynamic treatment).

Advantageously, the use of a filamentary discharge in a soft regime allows to modify the homogeneity of the electrode and/or the deposited shell and to influence the final porosity of the composite electrode covered with the shell.

Typically, the plasma is generated at atmospheric pressure in a controlled mixture of helium with a molecule precursor of organosilane or an organoalane bonds, for example said precursor is polyalkyldisiloxane, for example a disiloxane, for example Hexamethyldisiloxane (HMDSO), 2,4,6,8-Tetramethylcyclotetrasiloxane (TMCTS) or tetraethoxysilane (TEOS), etc.

In one embodiment, the molecule precursor is a Fluor based molecule such as: CxFy or CxFyAz (wherein A is a heteroatom, x, y and z represent the number of respective atoms present) such as 1-Fluoroheptane. However, the aim of the present invention needs to avoid non eco-friendly material. Accordingly, this embodiment is less preferred. Moreover, such Fluor based materials would be more difficult to hold at the industrial scale.

Advantageously, the electrical excitation used is in the audio domain with power control throughout the deposition process.

Typically, the thickness of the shell varies according to the processing time.

In one embodiment, several layers are deposited.

In one embodiment, layers having different chemical nature are deposited.

Advantageously, the morphology and chemical composition of the shell is different depending on the type of precursors.

Advantageously, the morphology of the shell (roughness, electrode coating, porosity, thickness) as well as the chemistry of groups present on the surface and inside the shell are parameters allowing to optimize the final product.

Advantageously, said plasma treatment allows modifying the porosity of the shell. Advantageously, depending on the porosity, the tortuosity is modified, which may influence the ionic transport in the membrane.

Advantageously, said plasma treatment controls the chemical nature of the surface of the composite electrode and of the volume of the shell, which allows modifying the stability of the membranes produced, thereby allowing controlling the degradability of the composite electrode, notably for temporal applications. Accordingly, the present invention relates to time-controlled degradable electrodes.

Advantageously, the use of non-toxic precursor in the plasma process not only makes it possible to use an environmentally friendly manufacturing process, but also to produce a non-toxic shell that can degrade without releasing components that are difficult to biodegrade and/or highly toxic.

The present invention also relates to a process for preparing a composite electrode comprising a body comprising at least one water-soluble polymer, wherein said process comprises depositing by plasma deposition, in particular Plasma-Enhanced Chemical Vapor Deposition (PECVD) a material at least on a part of said body of said composite electrode.

The plasma deposition, in particular Plasma-Enhanced Chemical Vapor Deposition (PECVD) is referred to also as plasma treatment.

In particular, the present invention relates to a process comprising depositing by said plasma deposition at least one organic or organometallic material, thereby preparing a composite electrode according to the present invention.

Advantageously, said plasma deposition is performed under atmospheric pressure.

In one embodiment, said plasma deposition is performed in the presence of a vapor phase comprising a precursor of organosilane or an organoalane bonds, for example said precursor is polyalkyldisiloxane, for example a disiloxane, for example Hexamethyldisiloxane (HMDSO), 2,4,6,8-Tetramethylcyclotetrasiloxane (TMCTS) or tetraethoxysilane (TEOS).

In one embodiment, said plasma deposition is performed according to a roll-to-roll process.

Advantageously, said plasma treatment is performed on an electrode working in contact with an organic media. The present invention allows better control of the behavior of the electrode/electrolyte interface.

Advantageously, the plasma treatment is performed directly on one or more electrodes, which means it is easy to proceed and to integrate in a fabrication line, particularly in an existing industrial process.

Typically, the present invention comprises the deposition of a macroscopically homogeneous shell (called also membrane or film) on the surface of the body of the composite electrode. This process makes it easy to modify the composite electrode deposited on the current collector to make it compatible with the working chemical environment.

Advantageously, by performing said plasma treatment, a coating layer (shell) is formed at the surface of the composite electrode which stabilizes the electrode surface with respect to the cohesion of the composite electrode. Advantageously, according to the invention, the composite electrode is stable in contact with an aqueous electrolyte. In the absence of said coating layer the composite electrode has no sufficient cohesion in the presence of an aqueous electrolyte or an aqueous medium, typically water.

Advantageously, the use of an aqueous solvent considerably reduces the manufacturing costs of the electrodes. Indeed, the organic solvents commonly used with typical binders (NMP solvent with PVDF) represent an additional cost in the process because of the solubilization of the binder and for the treatment of solvent vapors during electrode drying.

Advantageously, the shell allows the diffusion of ions and guarantees an electrochemical stability of the electrode to ensure said device storing electrical energy operation.

Advantageously, the shell improves the mechanical stability of the composite electrode, increasing its stability range in aqueous media.

Advantageously, the shell prevents the dissolution of the water-soluble binder and adapts to mechanical changes created during charging and discharging cycles of said device storing electrical energy and electrode handling in the aqueous medium.

Advantageously, the process is compatible regardless of the active electrode material used, as long as they are compatible in the medium and the electrochemical working potential ranges. Advantageously, the process is also compatible regardless of the electrode composition used. Preferably, the process is functional regardless of the thickness of the composite electrode as soon as the electrode is functional.

Typically, said process does not require the use of masks to produce membranes that allow the passage of ions.

In one embodiment, said process comprises the use of masks to locate the treatment on the electrode.

The preparation of the composite electrode body is performed according to the knowledge of the skilled person.

Preferably, an aqueous solvent, and more preferably water, is used as a solvent for the preparation of the composite electrode body.

The present invention also relates to a device storing electrical energy wherein said device comprises one or more composite electrodes according to the present invention or prepared by the process according to the present invention.

In one embodiment, said device comprises an aqueous solution in contact with said composite electrodes according to the present invention.

In one embodiment, said device comprises at least one aqueous electrolyte.

In one embodiment, said device comprises at least one organic electrolyte.

In one embodiment, said device is a battery, for example a Li or Li-ion battery, a sodium or multivalent ion battery, such as for example Mg or Ca, a hybrid battery, for example a hybrid battery using Zn, Li or Na ions, or alkaline battery.

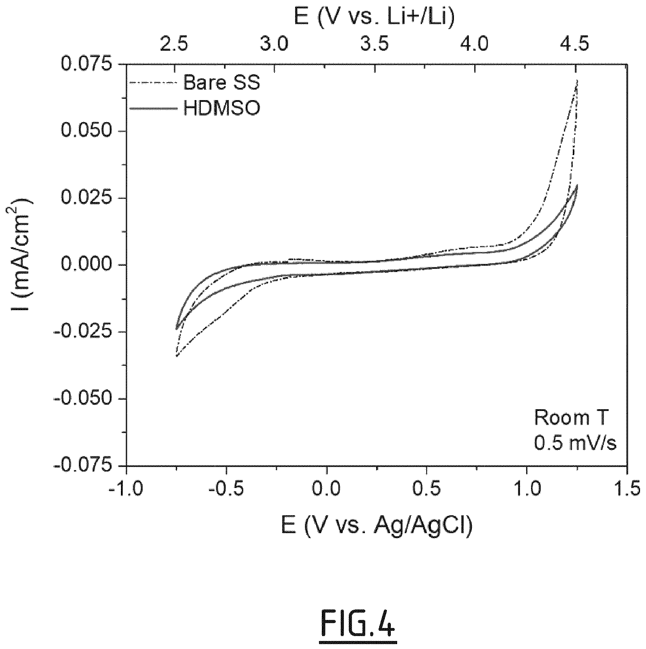

In the figures:

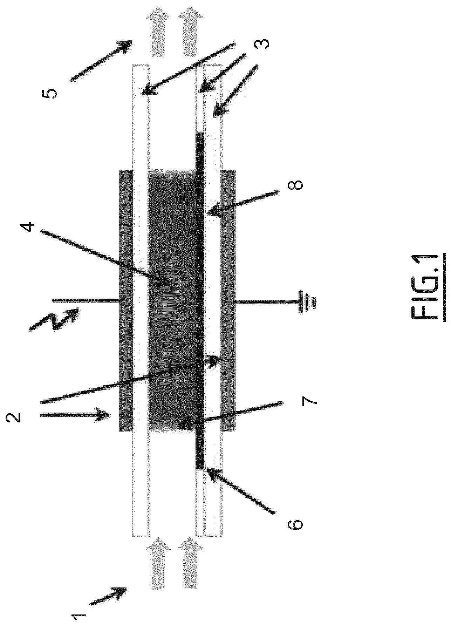

Fig. 1. is a schematic representation of a configuration of the Plasma-Enhanced Chemical Vapor Deposition System (PECVD).

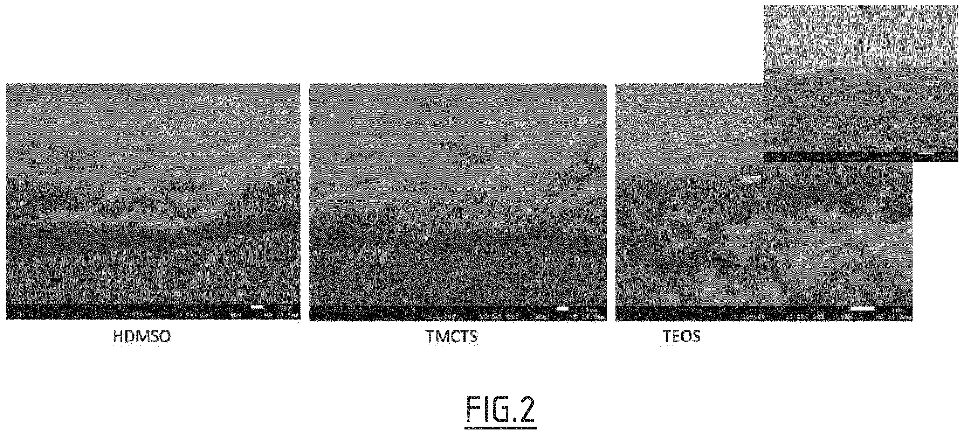

Fig. 2. Represents different morphologies of shell depending on the precursor of the organometallic shell: HMDSO (left), TMCTS (middle) or TEOS (right).

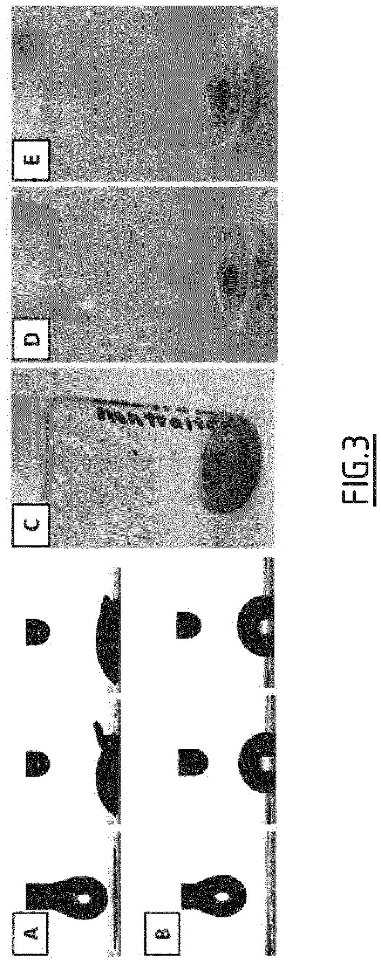

Fig. 3 A/B: represent contact angle measurements for a CMC electrode A) uncoated and B) after coating with a shell according to the invention.
   C/D: represent tests of mechanical stability of the electrode in an aqueous electrolyte. C) for a CMC electrode 10s after hardening, D) for a coated electrode 10s after hardening and E) 6 months after hardening
Fig. 4 represent measurement of the deposition stability window in a LiTFSI electrolyte 1m in H₂O

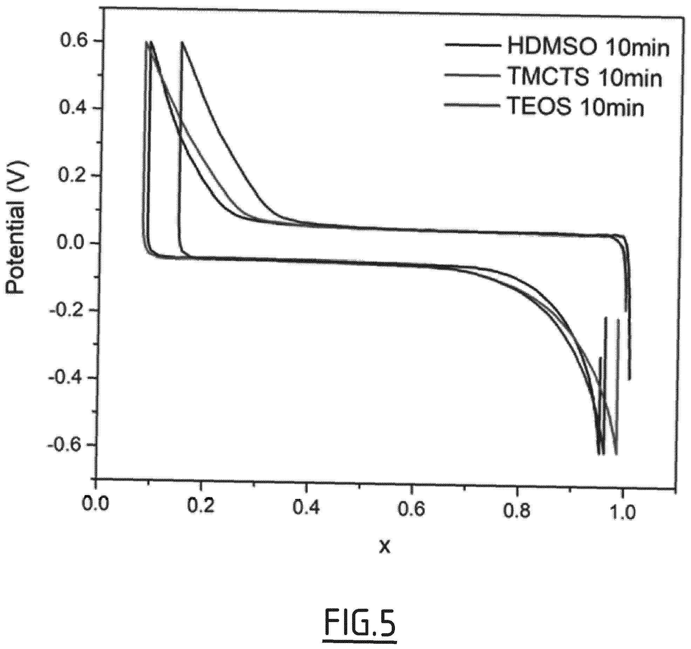

Fig. 5 represents galvanostatic curves for different surface organosilicon deposits in an electrolyte 1m LITFSI in H₂O to C/10

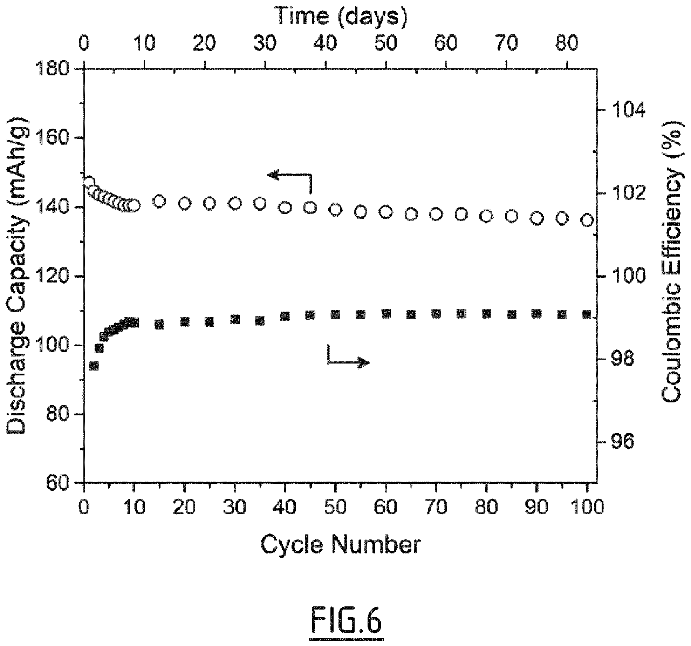

Fig. 6 represents curves of the coulombic Efficiency in an electrolyte 1m LITFSI in H₂O to C/10, as a function of the number of cycles for a LFP-CMC electrode having a shell obtained by HMDSO plasma deposition.

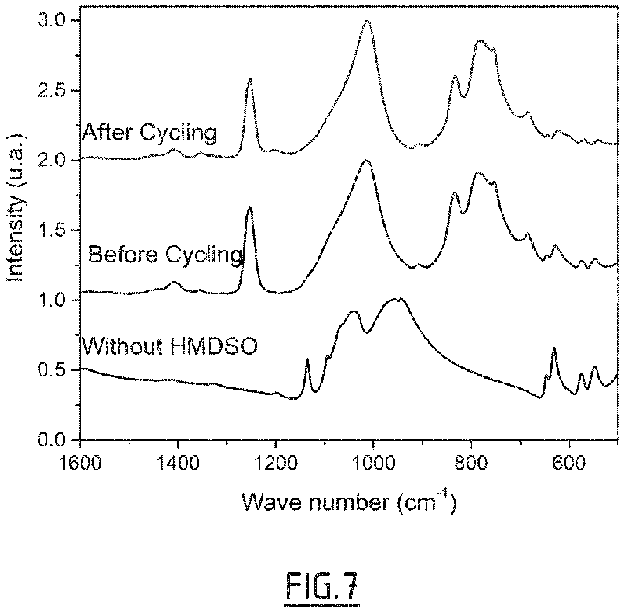

Fig. 7 is an infra-red spectrum of the surface of the body of a composite electrode with CMC as binder without a shell and of a shell obtained by HMDSO plasma deposition shell before cycling and after cycling.

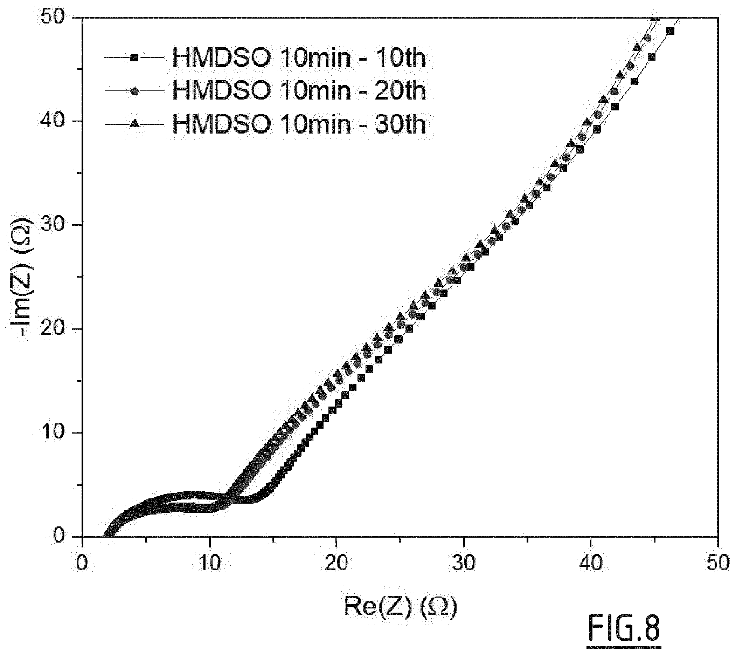

Fig. 8 represents impedance curves in an electrolyte 1m LITFSI in H₂O as a function of the number of cycles for a LFP-CMC electrode having a shell obtained by HMDSO plasma deposition

### Examples

The following illustrative examples of the invention are directed to an electrode and a battery representing one kind of device storing electrical energy.

### Electrode preparation

LiFePO₄ (P2 from Johnson Matthey) was used as active material. LiFePO₄ was also chemically oxydized into FePO₄ using acetic acid and hydrogen peroxide method reported by Lepage et *al.* ⁴⁶. Note that other active materials, stable in the electrochemical stability window and in contact with aqueous electrolytes can be used.

The electrodes for electrochemical evaluation in aqueous electrolyte were fabricated by combining 84 wt% of active material (either LFP or FePO₄), 9 wt% of carbon black Timcal C65, and 7 wt% of sodium carboxymethyl cellulose (CMC from Sigma Aldrich 419273, Mw=90,000 g/mol) binder previously dissolved in deionized water. The slurry was mixed for 20 min to get homogeneous by using a Kurabo Mazerustar KK-50S planetary mixer-deaerator and spread on a 30 µm thick stainless-steel foil using the doctor blade method. The use of stainless-steel current collector (8) avoids the typical corrosion issue observed in Al current collector in aqueous media with lithium salts. The coating was then dried at 70 °C under vacuum in an oven overnight. Discs of 8 mm for the LFP electrode and 12 mm for the FePO₄ one were punched from the coating. The over-dimensioning of the anode allowed for balancing of the cathode capacity and ensured the limitations are only due to the working electrode.

### Plasma Deposition

The polymer was deposited in a plane-to-plane dielectric barrier discharge at atmospheric pressure. The experimental setup used in this work was described in previous papers (J Profili, O Levasseur, N Naudé, C Chaneac, L Stafford, N Gherardi, Influence of the voltage waveform during nanocomposite layer deposition by aerosol-assisted atmospheric pressure Townsend discharge, 2016/8/7, Journal of Applied Physics, Volume 120, Issue 5, Pages 053302, AIP Publishing; Jacopo Profili, Olivier Levasseur, Jean-Bernard Blaisot, Anja Koronai, Luc Stafford, Nicolas Gherardi, Nebulization of nanocolloidal suspensions for the growth of nanocomposite coatings in dielectric barrier discharges, 2016/10, Plasma Processes and Polymers, Volume 13, Issue 10, Pages 981-989; Olivier Levasseur, Reetesh Kumar Gangwar, Jacopo Profili, Nicolas Naudé, Nicolas Gherardi, Luc Stafford, Influence of substrate outgassing on the plasma properties during wood treatment in He dielectric barrier discharges at atmospheric pressure, 2017/8, Plasma Processes and Polymers, Volume 14, Issue 8, Pages 1600172). Briefly, all experiments were conducted with helium (He, PURITY Praxair) as the carrier gas. The gas mixture (1) (4.5 SLM of He with 120 mg/h of HMDSO vapour) was continuously injected from one side of the DBD cell to the exit (5). The constant atmospheric pressure (1 bar) was achieved during the process through a gentle pumping of the vessel. The purity of the gases injected during the process was ensured by keeping the DBD cell in a sealed stainless-steel chamber under vacuum prior the experiments. The discharge cell consists of two dielectric plates (3) (Al₂O₃, 635 µm thick) separated by 1 mm gas gap. The electrodes (2) (silver-platinum paste, 3X3 cm2 in area) are spread on side of the alumina surfaces. The stainless-steel substrates within the electrode's disks were placed on the lower dielectric surface between the electrodes (8) at its surface in contact with the discharge area (4). To prevent any detachment of the substrate from the electrode the metal foil was attached to the lower surface with Kapton® tapes on four sides. Note that this geometrical configuration allows the treatment of foils and laminar substrates and can be easily adapted into a roll-to-roll configuration for the continuous treatment of electrodes foils.

The discharge area (4) is starting at a distance (7) of about 10 mm from the beginning of the substrate (6)

The discharge is then ignited in the discharge area (4) by applying a sinusoidal voltage (2 kV, 20 kHz) to the electrodes. Treatment was carried out in these conditions for 10 minutes. The applied voltage and the current were measured by a high voltage probe (TEKTRONIX P6015A) and a wide-band current coil (LILCO Ltd. 13W5000), respectively. The oscilloscope (Tektronix DPO5204B) was used to record all the voltage and current waveforms as well as calculated the dissipate power during the deposition.

### Electrode Characterization

The morphology of the electrode was observed using a Tabletop Electronic Microscope HITACHI TM3030Plus and the cross section was investigated using a JEOL FE-SEM 7600 Field Emission Gun (FEG) Scanning Electron Microscopy (SEM), with a 10 kV accelerating voltage, a working distance of ≈4mm, and a magnification from 5 k to 50 k. Chemical mapping was performed using X-Ray Energy Dispersive Spectroscopy (EDS) to investigate the elemental distribution in the electrode before and after plasma treatment. The quality of the deposited film was characterized by ATR-FTIR (Vertex 70 (Bruker®) equipped with an attenuated total reflectance (ATR) module). X-Ray Diffraction (XRD) patterns of the electrode before and after deposition was performed using a Bruker D8 Advance with a Cu Kα radiation (λ =1.5406 Å) with steps of 0.02° in a 2θ range of 10-60° in order to characterize the structural modifications that occurred upon plasma treatment. The wetting behavior of the different surfaces was measured by using a contact angle goniometer (OneAttension Theta, Biolin Scientific). Each surface was characterized by studying the contact angle (sessile drop method) of the droplet (deionised water, 2 µL in volume) gently dropped on the surface of the material. The results were recorded with a video-camera system after stabilization of the volume (typically around 7 seconds) and during 300 s (not affected by the evaporation of the liquid).

### Battery Assembling and Electrochemical Measurements

Aqueous electrolytes were prepared under air and then degassed from O₂ using N2 before storage in a N2-filled glovebox. Precise amount of LiTFSI (3M) was weighed in an Ar-filled glovebox. LiTFSI was then dissolved in the corresponding volume of deionized water in order to reach 1m concentration. The same procedure was used for sulfate salts (Li₂SO₄, Na₂SO₄ and ZnSO₄ (Alfa Aesar)) solutions (1m).

All the cells were assembled in a N2-filled glovebox. Attention was taken to assemble the batteries in the absence of O₂ as it is detrimental to the battery cycle life ¹⁸. Film electrochemical stability was measured using a three electrode Swagelok cell. The working electrode was a 10 mm disc of stainless steel with 500nm thick HMDSO film, the counter electrode and reference electrode were respectively a 10 mm disc of stainless steel and an Ag/AgCl electrode (BaSi inc). For the sake of comparison, the same configuration was used with a bare stainless-steel disc as working electrode. Cyclic voltammetry was undertaken between -0.75 to 1.25 V vs. Ag/AgCI, i.e. 2.51 to 4.51 vs. Li⁺/Li, with a sweep rate of 0.5 mV/s in the case of LiTFSI electrolyte. With sulfate electrolytes, the stability window was measured from -0.50 to 1.00 V vs. Li⁺/Li.

Two-electrode Swagelok cells were used for the cycling tests. A GF/D borosilicate glassfiber sheet from Whatman was used as a separator. The electrochemical performances were determined on the cells between -0.6 V and 0.6 V vs. LiFePO₄/FePO₄ (i.e. 2.8 V and 4.0 V vs. Li⁺/Li) at different current rates. All the electrochemical measurements were performed using a VMP electrochemical station (Biologic, France) at room temperature. For each sample, 2 cells were assembled to insure reproducibility. Capacity variations lower than 1 mAh/g were found for every 2-cell sets. For impedance measurement, three-electrode cells were used in the same configuration with Ag/AgCI reference electrode.

As a general remark:
The plasma treatment according to the invention uses only non-toxic gases and a small amount of non-toxic precursor (typically 1-1000 ppm) for the manufacture of the shell. The plasma treatment according to the invention can be generated at atmospheric pressure, which greatly reduces the costs associated with pumping and gas control systems. The process according to the invention is therefore economical and green.

The process is very suitable for processing substrates in the form of flexible and configurable sheets with different power supplies. It is simple to make and is very compatible with serial industrial processes.

## Claims

1. A composite electrode for a device storing electrical energy wherein said electrode comprises an electrode body and an electrode shell, wherein said body comprises at least one water-soluble polymer and wherein at least a part of said shell comprises a shell comprising at least one organic or organometallic material.

2. The composite electrode according to claim 1, wherein said water-soluble polymer is selected from the group consisting of polysaccharides, Poly(ethylene glycol) (PEG), Polyoxyethylene (POE), Polyvinyl pyrrolidone (PVP), Polyvinyl alcohol (PVA), polylactic acid (PLA), Polyacrylic acid (PAA), Polyacrylamides, N-(2-Hydroxypropyl) methacrylamide (HPMA), Cellulose derivatives, in particular alkylcellulose, dialkylcellulose, hydroxyalkylcellulose, hydroxyalkylalkylcellulose, carboxyalkylcellulose, Pectins, Chitosan, Chitosan Derivatives, Dextran, Carrageenan, Guar gum, Guar gum derivatives, in particular chydroxypropyl guar, arboxyalkyl guar, Hyaluronic acid (HA), Starch or Starch Based Derivatives, polyethyloxazoline, and derivatives thereof.

3. The composite electrode according to claim 1 or 2, wherein said water-soluble polymer is selected from the group consisting of Hydroxypropylmethyl cellulose (HPMC), Hydroxypropyl cellulose (HPC), Hydroxyethyl cellulose (HEC), Carboxy methyl cellulose (CMC), in particular Sodium carboxy methyl cellulose (Na-CMC).

4. The composite electrode according to any one of claims 1 to 3, wherein said organic or organometallic material is deposited by plasma treatment, for example said organometallic material is an organosilane or an organoalane or a mixture of an organic material with an organometallic material; for examples a precursor of an organometallic material is a siloxane, for example divinyltetramethyl disiloxane (DVTMDSO) octamethyl cyclotetrasiloxane (OMCATS) hexamethyldisilazane (HMDSN), tetramethyldisiloxane, tetramethylcyclotetrasiloxane, Trimethylsilane, methyl- and methoxy-group organosilicon like tetramethoxysilane (TMOS), methyltrimethoxysilane (MTMOS), dimethyldimethoxysilane (DMDMOS), trimethylmethoxysilane (TMMOS), or Hexamethyldisilane.

5. The composite electrode according to any one of claims 1 to 4, wherein said organometallic material is deposited by plasma deposition, in particular Plasma-Enhanced Chemical Vapor Deposition (PECVD).

6. A process for preparing a composite electrode comprising a body comprising at least one water-soluble polymer, wherein said process comprises depositing by plasma deposition, in particular Plasma-Enhanced Chemical Vapor Deposition (PECVD) a material at least on a part of said body of said composite electrode.

7. The process according to claim 6, wherein said process comprises depositing by said plasma deposition at least one organic or organometallic material, thereby preparing a composite electrode according to any one of claims 1 to 5.

8. The process according to claim 6 or 7, wherein said plasma deposition is performed under atmospheric pressure.

9. The process according to any one of claims 6 to 8, wherein said plasma deposition is performed in the presence of a vapor phase comprising a precursor of organosilane or an organoalane bonds, for example said precursor is polyalkyldisiloxane, for example a disiloxane, for example Hexamethyldisiloxane (HMDSO), 2,4,6,8-Tetramethylcyclotetrasiloxane (TMCTS) or tetraethoxysilane (TEOS).

10. The process according to any one of claims 6 to 9, wherein said plasma deposition is performed according to a roll-to-roll process.

11. A device storing electrical energy wherein said device comprises one or more composite electrodes according to any one of claims 1 to 5 or prepared according to any one of claims 6 to 10.

12. The device according to claim 11, wherein said device comprises an aqueous solution in contact with said composite electrodes according to any one of claims 1 to 5.

13. The device according to claim 11 or 12, wherein said device comprises at least one aqueous electrolyte.

14. The device according to claim 11 or 12, wherein said device comprises at least one organic electrolyte.

15. The device according to any one of claims 11 to 14, wherein said device is a battery, for example a Li or Li-ion battery, a sodium or multivalent ion battery, such as for example Mg or Ca, a hybrid battery, for example a hybrid battery using Zn, Li or Na ions, or alkaline battery.
